# Europäisches Patentamt

## European Patent Office

## Office européen des brevets

(11) Veröffentlichungsnummer: **0 043 068**
**B1**

(12) **EUROPÄISCHE PATENTSCHRIFT**

(51) Int. Cl.³: **H 02 K 37/00**, H 02 K 21/14, H 02 K 19/06

(45) Veröffentlichungstag der Patentschrift:
15.02.84

(21) Anmeldenummer: **81104796.8**

(22) Anmeldetag: **22.06.81**

(54) Statoranordnung eines Kleinmotors, insbesondere eines Klauenpol-Schrittmotors.

(30) Priorität: **30.06.80 DE 3024674**

(43) Veröffentlichungstag der Anmeldung:
**06.01.82 Patentblatt 82/1**

(45) Bekanntmachung des Hinweises auf die Patenterteilung:
**15.02.84 Patentblatt 84/7**

(84) Benannte Vertragsstaaten:
**CH DE FR GB IT LI**

(56) Entgegenhaltungen:
**DE - A - 2 136 901**
**DE - A - 2 451 876**
**DE - A - 2 535 149**
**DE - A - 2 613 038**
**DE - A - 2 829 945**
**DE - B - 1 021 943**
**FR - A - 2 117 191**
**GB - A - 867 659**
**US - A - 3 234 418**
**US - A - 3 495 113**
**US - A - 3 504 253**
**US - A - 3 732 616**
**US - A - 3 783 313**
**US - A - 3 878 802**

(73) Patentinhaber: **SIEMENS AKTIENGESELLSCHAFT,
Berlin und München Wittelsbacherplatz 2,
D-8000 München 2 (DE)**

(72) Erfinder: **Renkl, Klaus, Dipl.-Ing.,
Theodor-Heuss-Strasse 12, D-8702 Kürnach (DE)**
Erfinder: **Schmidt, Helmut, Unterer Weinberg 44,
D-8701 Reichenberg/Württ. (DE)**

## Statoranordnung eines Kleinmotors, insbesondere eines Klauenpol-Schrittmotors

Die Erfindung bezieht sich auf eine Statoranordnung eines Kleinmotors, insbesondere eines Klauenpol-Schrittmotors, mit zwei axialen hintereinander angeordneten Statorsystemen in einem umgebenden zylindrischen Gehäuse mit stirnseitigen axialen Schlitzöffnungen, in die insgesamt vier identische Polbleche mit zugeordneten radialen Vorsprüngen eingreifen.

Bei einem bekannten derartigen Kleinmotor (DE-B-2535149) besteht der Stator aus zwei Einzelbaugruppen, die axial nebeneinander durch Schweissen nachträglich zu einem Motor zusammengefasst sind. Jede Baugruppe weist einen eigenen metallischen Zylindermantel auf, in dessen axiale Aussparungen beidseitig Stirnscheiben mit radialen Vorsprüngen eingreifen. Beim Zusammenbau der beiden Baugruppen werden die Zylindermäntel an ihren benachbarten Stirnrändern miteinander verschweisst. Die einander benachbarten Stirnscheiben sind ohne weitere Befestigungsmittel zwischen den Zylindermänteln axial gehalten, die äusseren Stirnscheiben werden beispielsweise durch Verstemmen mit ihrem jeweiligen Zylindermantel verbunden.

Zur Herstellung von Schrittmotoren in Klauenpolbauart ist es weiterhin bekannt, die Klauenpolbleche als tiefgezogene Topfgehäuse zu fertigen und für ein Statorsystem die Topfgehäuse paarweise ineinander zu pressen und zusätzlich durch Kleben zu verbinden. Zwei derartige Statorsysteme werden dann anschliessend durch Punktschweissen oder ähnliche Verfahren zu der gesamten Statoranordnung zusammengefügt. Die beidseitig das Gehäuse abschliessenden Lagerplatten sind mit den äusseren Klauenpolblechteilen verschweisst.

Aufgabe der vorliegenden Erfindung ist es, eine einfachere und kostengünstigere Herstellung eines Klauenpol-Schrittmotors zu ermöglichen. Die Lösung dieser Aufgabe ist durch die kennzeichnenden Merkmale des Patentanspruchs 1 bzw. des nebengeordneten Patentanspruchs 4 möglich. Vorteilhafte Ausgestaltungen sind jeweils Gegenstand der Unteransprüche.

Da bei der erfindungsgemässen Ständeranordnung das Gehäuse für beide Ständer einteilig ist, entfällt die bei den bekannten Motoren notwendige Verbindung mit der erforderlichen zusätzlichen Ausrichtung der beiden Ständersysteme. Durch einfaches Einlegen sämtlicher vier Polbleche in die Schlitzöffnungen, die bei einem Biegestanzteil in besonders einfacher Weise in die ebene Blechplatine eingestanzt werden können, wird eine verkantungsfreie axiale Positionierung dieser Bleche auf einfache Weise möglich. Durch die Lagefiguration der Schlitzöffnungen am Gehäuseumfang ist beim Einlegen automatisch die insbesondere für einen bestimmten Drehsinn notwendige Verdrehung der Polbleche und der beiden Satorsysteme zueinander gesichert. Die bis zur axialen Anlage in die längeren Schlitze eingelegten inneren und nach dem Einstecken der Ringspulen in die axial kürzeren Schlitzöffnungen eingesteckten Polbleche können dann ohne weitere Eigenbefestigung in der axialen Gegenrichtung durch die beidseitig gegengelegten und zweckmässigerweise mit ihren radialen Nasen in die gleichen Schlitzöffnungen der äusseren Polbleche eingreifenden und am Gehäuse z.B. durch Verstemmen befestigten Lagerdeckel gesichert werden.

Die Erfindung sowie weitere vorteilhafte Ausgestaltungen werden im folgenden anhand eines schematisch in der Zeichnung dargestellten Ausführungsbeispiels erläutert, das den gesamten Motor mit seinen wesentlichen Bauteilen in einer perspektivischen ,,Explosions''-Darstellung zeigt.

Die Figur zeigt die wesentlichen Bauteile eines Schrittmotors in Klauenpolbauart mit zwei Statorsystemen in einem gemeinsamen zylindrischen Gehäuse 7. In das gemeinsame zylindrische Gehäuse 7 werden bei der Montage von der linken vorderen Stirnseite ein erstes Ständersystem 3, 8, 3 und von der hinteren rechten Stirnseite ein zweites Ständersystem 3, 9, 3 eingesteckt, der dauermagnetische Läufer 10 eingebracht und anschliessend das Gehäuse 7 beidseitig durch je einen Lagerdeckel 1 bzw. 6 geschlossen, wobei die Welle des Motorläufers 10 in Lagern 12 bzw. 62 der Lagerdeckel 1 bzw. 6 gelagert ist. Jedes Ständersystem 3, 8, 3 bzw. 3, 9, 3 besteht aus je zwei Polblechen 3 mit axial gegeneinander abgebogenen Polzähnen. Die Polbleche eines Ständersystems sind im fertigmontierten Zustand in geringem tangentialen Abstand zueinander derart ineinander geschachtelt, dass sich am Umfang die Pole der beiden Polbleche eines Ständersystems einander abwechseln. Die Pole der derart zusammengesteckten Polbleche werden aussen von je einer ringförmigen, von einem Spulenkörper 81 bzw. 91 getragenen Erregerspule 8 bzw. 9 umschlungen.

Zur richtigen axialen und tangentialen gegenseitigen Positionierung sämtlicher vier in das Gehäuse eingesteckter Einzelpolbleche 3 und somit auch der beiden Ständersysteme zueinander, sind in dem gemeinsamen Gehäuse 7 für jedes Polblech drei spezifische axiale stirnseitig offene Schlitzöffnungen 71, 72 bzw. 74, 75 vorgesehen und an die Polbleche 3 jeweils drei den Gehäuse-Schlitzöffnungen 71, 72 bzw. 74, 75 entsprechende, am Umfang verteilte radiale Nasen 35 einstückig angestanzt.

Hinsichtlich einer aufwandsarmen Fertigung, weitreichenden Bauteilnormierung und einfachen Montage sind bei einer Ausführungsform der Erfindung sämtliche Polbleche 3 einschliesslich der angestanzten radialen Nasen 35 gleichartig ausgebildet, und es sind pro Polblech 3 mehrere am Umfang unsymmetrisch verteilte radiale Nasen 35 und an den Stirnseiten des gemeinsamen Gehäuses 7 entsprechend ausgebildete und verteilte axiale Schlitzöffnungen 71, 72 bzw. 74, 75 vorgesehen. Die gegenseitige axiale Positionierung der vier Polbleche 3 ist allein durch die axiale Tiefe der Schlitzöffnungen 71, 72 bzw. 74, 75 und die gegenseitige tangentiale Ausrichtung der vier Polbleche 3 ist allein durch eine je Polblech 3 spezifische Lagefiguration der Schlitzöffnungen 71, 72 bzw. 74, 75 am Umfang des gemeinsamen Gehäuses festgelegt. Die stirnseitig offenen, am Umfang verteilten Schlitzöffnungen dienen also gleichzeitig der axialen verkantungsfreien Anlage und der tangentialen Positionierung zur Sicherung der notwendigen Verdrehung der Polbleche und der beiden Statorsysteme zueinander; gleichzeitig sind die Polbleche so gestanzt, dass sie mit ihrer übrigen Aussenkontur an dem Innenumfang des Gehäuses radial zentrierbar sind.

Wird nach einer anderen Ausführungsform der Erfindung bei Beibehaltung der identischen Ausbildung der vier Polbleche je Polblech eine der drei Nasen eines jeden Polblechs und die entsprechende Schlitzöffnung im Vergleich zu den übrigen Nasen bzw. Schlitzöffnungen der gleichen Lagefiguration tangential breiter oder schmaler ausgebildet, so kann eine spezifische Lagefiguration des einzusteckenden Polblechs auch bei symmetrischer Verteilung der drei Nasen am Umfang erreicht werden; sowohl bei symmetrischer als auch bei unsymmetrischer Verteilung der Nasen gibt die unterschiedlich ausgebildete eine Nase bzw. der unterschiedlich ausgebildete eine Schlitz bei der Montage des Polblechs eine gut sichtbare Orientierungshilfe für die tangentiale Winkellage des auf die stirnseitige axial geschlitzte Öffnung des Gehäuses zu bewegenden Polblechs. Die zuvor beschriebene, auf einfache Weise erzielbare Sicherung der notwendigen Verdrehung der vier Polbleche zueinander, ist insbesondere zur Festlegung des Drehsinnes des Motorläufers erforderlich.

In fertigungstechnisch besonders günstiger Weise ist weiterhin vorgesehen, dass das gemeinsame Gehäuse 7 aus einem gerollten Biegestanzteil besteht und die axialen Schlitzöffnungen 71 bis 75 vor dem Rollen in die ebenen Gehäuseblech-Platine eingestanzt sind. Die nach dem Rollen voreinander liegenden Längskanten der Gehäuseblech-Platine können entweder stumpf voreinanderstossen oder in an sich bekannter Weise durch gegebenenfalls nachträglich verstemmte Schwalbenschwanz-Verbindungen miteinander formschlüssig verbunden werden.

Wie aus der Figur ersichtlich, weist das gemeinsame Gehäuse 7 von der linken Stirnseite her tiefeintauchende Schlitzöffnungen 71 und von der rechten Stirnseite her tiefeintauchende Schlitzöffnungen 75 auf. In die insgesamt drei am Umfang verteilten Schlitzöffnungen 71 werden bei der Montage jeweils die korrespondierenden drei Nasen 35 des rechten Polbleches 3 des linken Ständersystems 3, 8, 3 bis zur axialen Anlage eingesteckt; die axialen Schlitzöffnungen 75 dienen in entsprechender Weise zur tangentialen Führung und entsprechenden Positionierung des linken Polbleches 3 des rechten Ständersystems 3, 9, 3. In die kurz eintauchenden axialen Schlitzöffnungen 72 an der linken Stirnseite des gemeinsamen Gehäuses 7 tauchen die Nasen 35 des linken Polbleches 3 des linken Ständersystems 3, 8, 3 bis zur axialen Anlage ein; entsprechend werden in die kurz eintauchenden axialen Schlitzöffnungen 74 an der rechten Stirnseite des gemeinsamen Gehäuses 7 die radialen Nasen 35 des rechten Polbleches 3 der Ständersysteme 3, 9, 3 eingesteckt.

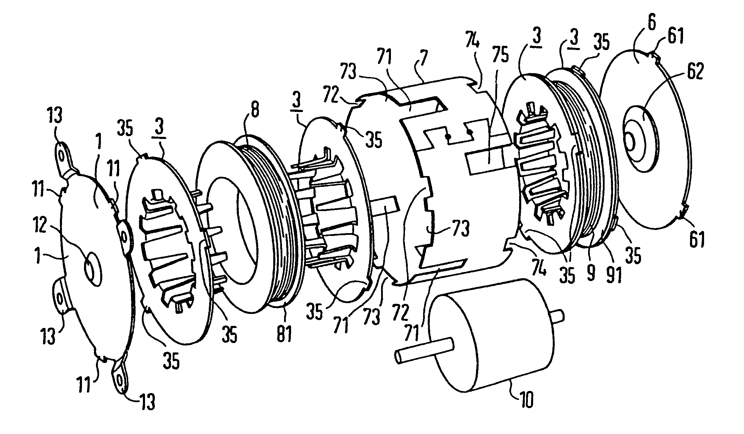

In vorteilhafter Weise werden die jeweils kurz eintauchenden axialen Schlitzöffnungen 72 bzw. 74 zum Einstecken entsprechen der Nasen 11 bzw. 61 an den Lagerdeckeln 1 bzw. 6 mitbenutzt. Die Lagerdeckel 1, 6 werden zweckmässigerweise anschliessend durch Verstemmen der axial aussen in den Schlitzöffnungen 72 bzw. 74 liegenden Nasen 11 bzw. 61 mit dem Gehäuse 7 gehaltert und sichern somit auf einfache Weise den Zusammenhalt des aus normierten Einfachbauteilen zusammengesteckten Klauenpolmotors. Aus hier nicht interessierenden Gründen ist die linke Lagerplatte 1 in Fig. 1 um ca. 120° entgegen dem Uhrzeigersinn gedreht dargestellt. Die am linken Lagerdeckel 1 radical überstehenden gekröpften Ohren 13 tauchen an ihren Abbiegungsstellen in korrespondierende axiale Schlitzöffnungen 73 an der linken Stirnseite des gemeinsamen Gehäuses 7 ein.

Es dürfte ersichtlich sein, dass durch ein als Biegestanzteil gerolltes gemeinsames Gehäuse mit vor dem Rollen in die Gehäuseblech-Platine in bestimmter axialer Tiefe und bestimmter tangentialer Lagefiguration am Umfang verteilter axialer Schlitzöffnungen und entsprechender an die Polbleche mitangestanzter radialer Nasen eine herstellungs- und fertigungstechnisch besonders günstige Konstruktion eines Klauenpolschrittmotors möglich ist. In vorteilhafter Weise können die axialen Schlitzöffnungen, insbesondere die grosser axialer Tiefe zusätzlich zum Herausführen der Leitungen der Erregerspulen benutzt werden.

### Aufstellung der Bezugszeichen

| 1 | Lagerdeckel | |
| 11 | Lagerdeckel | — Nasen |
| 12 | Lagerdeckel | — Lager |
| 13 | Lagerdeckel | — Ohren |
| 3 | Polblech | |
| 35 | Polblech | — Nasen |
| 6 | Lagerdeckel | |
| 61 | Lagerdeckel | — Nasen |
| 62 | Lagerdeckel | — Lager |
| 7 | Gehäuse | |
| 71, 75 | Gehäuse | — Schlitzöffnungen, tiefeintauchend |
| 72, 74 | Gehäuse | — Schlitzöffnungen, kurzeintauchend |
| 73 | Gehäuse | — Schlitzöffnung |
| 8 | Erregerspule | |
| 81 | Erregerspule | — Spulenkörper |
| 9 | Erregerspule | |
| 91 | Erregerspule | — Spulenkörper |
| 10 | Motorläufer | |

## Patentansprüche

1. Statoranordnung eines Kleinmotors, insbesondere eines Klauenpol-Schrittmotors, mit zwei axial hintereinander angeordneten Statorsystemen in einem umgebenden zylindrischen Gehäuse (7) mit stirnseitigen axialen Schlitzöffnungen, in die insgesamt vier identische Polbleche (3) mit zugeordneten radialen Vorsprüngen eingreifen, dadurch gekennzeichnet, dass für beide Statorsysteme (3, 8, 3 bzw. 3, 9, 3) ein gemeinsames Gehäuse (7) mit stirnseitigen axialen Schlitzöffnungen (71, 72, 74, 75) entsprechend den unsymmetrisch am Umfang der Polbleche (3) verteilten radialen Nasen (35) vorgesehen und die gegenseitige axiale Positionierung der vier Polbleche (3) allein durch die axiale Tiefe der Schlitzöffnungen (71, 72, 74, 75) und die gegenseitige tangentiale Ausrichtung der vier Polbleche allein durch eine je Polblech (3) spezifische Lagefiguration der Schlitzöffnungen (71, 72, 74, 75) am Umfang des gemeinsamen Gehäuses (7) festgelegt ist.

2. Statoranordnung nach Anspruch 1, dadurch gekennzeichnet, dass die radialen Nasen (35) auch je Polblech (3) identisch ausgebildet sind.

3. Statoranordnung nach Anspruch 1, dadurch gekennzeichnet, dass je Polblech (3) zumindest eine radiale Nase und die jeweils entsprechende schlitzförmige Öffnung am gemeinsamen Gehäuse im Vergleich zu den übrigen Nasen bzw. Schlitzöffnungen der gleichen Lagefiguration schmaler oder breiter ausgebildet ist.

4. Statoranordnung eines Kleinmotors, insbesondere eines Klauenpol-Schrittmotors, mit zwei axial hintereinander angeordneten Statorsystemen in einem umgebenden zylindrischen Gehäuse (7) mit stirnseitigen axialen Schlitzöffnungen, in die insgesamt vier identische Polbleche (3) mit zugeordneten radialen Vorsprüngen eingreifen, dadurch gekennzeichnet, dass für beide Statorsysteme (3, 8, 3 bzw. 3, 9, 3) ein gemeinsames Gehäuse (7) mit stirnseitigen axialen Schlitzöffnungen (71, 72, 74, 75) entsprechend den symmetrisch am Umfang der Polbleche (3) verteilten, je Polblech zumindest bei einer Nase eine grössere oder kleinere tangentiale Breite aufweisenden, radialen Nasen (35) vorgesehen und die gegenseitige axiale Positionierung der vier Polbleche allein durch die axiale Tiefe der Schlitzöffnungen (71, 72, 74, 75) und die gegenseitige tangentiale Ausrichtung der vier Polbleche allein durch eine je Polblech (3) spezifische Lagefiguration der Schlitzöffnungen (71, 72, 74, 75) am Umfang des gemeinsamen Gehäuses (7) festgelegt ist.

5. Statoranordnung nach einem der Ansprüche 1 bis 4, dadurch gekennzeichnet, dass das Gehäuse (7) stirnseitig abschliessende Lagerplatten (1, 6) ebenfalls mit radialen Nasen (11, 61) in Schlitzöffnungen (73) des Gehäuses (7) eingelegt und am Gehäuse (7) gehaltert sind.

6. Statoranordnung nach einem der Ansprüche 1 bis 5, dadurch gekennzeichnet, dass das Gehäuse (7) aus einem gerollten Biegestanzteil besteht und die axialen Schlitzöffnungen (71 bis 75) vor dem Rollen in die ebene Gehäuseblech-Platine eingestanzt sind.

## Claims

1. A stator arrangement for a miniature motor, in particular a claw-pole stepping motor, comprising two stator systems arranged axially in series within a surrounding cylindrical housing (7) having end openings in the form of axial slots into which engage a total of four idential pole plates (3) having allocated radial projections, characterised in that the two stator systems (3, 8, 3 and 3, 9, 3) are provided with a common housing (7) with end openings (71, 72, 74, 75) in the form of axial slots corresponding to radial projections (35) distributed asymmetrically around the periphery of the pole plates (3); the mutual axial positioning of the four pole plates (3) is determined solely by the axial depth of the slots (71, 72, 74, 75); and the mutual tangential alignment of the four pole plates is determined solely by a positional configuration, specific to each pole plate (3), of the slotted openings (71, 72, 74, 75) at the periphery of the common housing (7).

2. A stator arrangement according to claim 1, characterised in that the radial projections (35) are also identically formed for each pole plate (3).

3. A stator arrangement according to claim 1, characterised in that for each pole plate (3), at least one radial projection and the corresponding slotted opening in the common housing is made narrower or wider than the other projections and slotted openings which form part of the same positional configuration.

4. A stator arrangement for a miniature motor, in particular a claw-pole stepping motor, comprising two stator systems, arranged axially in series in a surrounding cylindrical housing (7), having end openings in the form of axial slots into which engage a total of four identical pole plates (3) having allocated radial projections, characterised in that the two stator systems (3, 8, 3 and 3, 9, 3) are provided with a common housing (7) having end openings in the form of axial slots (71, 72, 74, 75) corresponding to the radial projections (35) which are distributed symmetrically around the periphery of the pole plates (3), and in respect of each pole plate, have a larger or smaller tangential width in the case of at least one projection; the mutual axial positioning of the four pole plates is determined solely by the axial depth of the slotted openings (71, 72, 74, 75); and the mutual tangential alignment of the four pole plates is determined solely by a positional configuration, specific to each pole plate (3), of the slotted openings (71, 72, 74, 75) at the periphery of the common housing (7).

5. A stator arrangement according to one of claims 1 to 4, characterised in that bearing plates (1, 6) closing the ends of the housing (7) are similarly inserted by means of radial projections (11, 61) in slotted openings (73) in the housing (7), and are held against the housing (7).

6. A stator arrangement according to one of claims 1 to 5, characterised in that the housing (7) consists of a rolled flexible punched component and the openings in the form of axial slots (71 to 75) are punched into the flat housing plate prior to rolling.

## Revendications

1. Agencement de stator d'un petit moteur, notamment d'un moteur pas-à-pas à pôles à griffes, comportant deux systèmes statoriques axiaux disposés l'un derrière l'autre dans un carter cylindrique (7) qui les entoure et qui comporte des ouvertures axiales en forme de fentes situées du côté frontal et dans lesquelles s'engagent au total quatre tôles polaires (3) identiques comportant des saillies radiales associées, caractérisé par le fait qu'il est prévu pour les deux systèmes statoriques (3, 8, 3 ou 3, 9, 3) un carter commun (7) qui comporte des ouvertures axiales en forme de fentes (71, 72, 74, 75) du côté frontal, en correspondance avec les ergots radiaux (35) répartis de façon non symétrique sur la périphérie des tôles polaires (3), et que le positionnement axial mutuel des quatre tôles polaires (3) est déterminé uniquement par la profondeur axiale des ouvertures en forme de fentes (71, 72, 74, 75) et l'alignement tangentiel mutuel des quatre tôles polaires est déterminé uniquement par une disposition spécifique pour chaque tôle polaire (3) des ouvertures en forme de fentes (71, 72, 74, 75) sur la périphérie du carter commun (7).

2. Agencement de stator suivant la revendication 1, caractérisé par le fait que les ergots radiaux (35) ont également une constitution identique pour chaque plaque polaire (3).

3. Agencement de stator suivant la revendication 1, caractérisé par le fait que pour chaque tôle polaire (3) au moins un ergot radial et l'ouverture en forme de fente respectivement correspondante sur le boîtier commun présentent une constitution moins large ou plus large par rapport aux autres ergots ou aux autres ouvertures en forme de fentes présentant la même disposition.

4. Agencement de stator d'un petit moteur, notamment d'un moteur pas-à-pas à pôles à griffes, comportant deux systèmes statoriques axiaux disposés l'un derrière l'autre dans un carter cylindrique (7) qui les entoure et qui comporte des ouvertures axiales en forme de fentes situées du côté frontal et dans lesquelles s'engagent au total quatre tôles polaires (3) identiques comportant des saillies radiales associées, caractérisé par le fait qu'il est prévu pour les deux systèmes statoriques (3, 8, 3 ou 3, 9, 3) un carter commun (7) qui comporte des ouvertures axiales en forme de fentes (71, 72, 74, 75) du côté frontal, en correspondance avec des ergots radiaux (35) répartis de façon symétrique sur la périphérie des plaques polaires (3), et présentant pour chaque tôle polaire, au moins dans le cas d'un ergot, une largeur tangentielle plus importante ou plus faible, et que le positionnement axial mutuel des quatre tôles polaires est déterminé uniquement par la profondeur axiale des ouvertures en forme de fentes (71, 72, 74, 75) et l'alignement tangentiel mutuel des quatre tôles polaires est déterminé uniquement par une disposition spécifique pour chaque tôle polaire (3) des ouvertures en forme de fentes (71, 72, 74, 75) sur la périphérie du carter commun (7).

5. Agencement de stator suivant une des revendications 1 à 4, caractérisé par le fait que des chapeaux de palier (1, 6) qui ferment frontalement le carter (7) et comportent également des ergots radiaux (11, 61) sont montés dans des ouvertures en forme de fentes (73) du carter (7) et sont fixés sur le carter (7).

6. Agencement de stator suivant une des revendications 1 à 5, caractérisé par le fait que le carter (7) est constitué par une pièce, obtenue par pliage et découpage combinés, qui est roulée et que les ouvertures axiales en forme de fentes (71 à 75) sont découpées dans la plaque de tôle plane du carter avant le roulage.